# EUROPEAN PATENT SPECIFICATION

(11) **EP 2 207 825 B1**
(45) Date of publication and mention of the grant of the patent: **29.06.2011**
(21) Application number: 08844086.2
(22) Date of filing: 22.10.2008
(51) Int. Cl.: C08F 290/06, C08F 2/06, C08F 220/00, G02B 1/04

(54) **PROCESS FOR FORMING RANDOM (METH)ACRYLATE CONTAINING PREPOLYMERS**
VERFAHREN ZUR BILDUNG GRADIENT (METH)ACRYLATHALTIGER PRÄPOLYMERE
PROCÉDÉ DE FABRICATION DE PRÉPOLYMÈRES STATISTIQUES CONTENANT DU (MÉTH)ACRYLATE

(30) Priority: 31.10.2007 US 984061 P; 06.10.2008 US 245935
(43) Date of publication of application: 21.07.2010
(73) Proprietor: Johnson & Johnson Vision Care, Inc., Jacksonville, FL 32256 (US); Kindt-Larsen, Ture, 2840 Holte (DK); Spanggaard, Holger, 2200 Copenhagen (DK); Magnusson, Bent, 3460 Birkeroed (DK); Rossignol, Helene, 1828 Frederiksberg (DK); Sorensen, Jens-Erik, 2900 Hellerup (DK); Wood, Joseph M., Jacksonville, Florida 32205 (US)
(72) Inventor: KINDT-LARSEN, Ture, DK-2840 Holte (DK); SPANGGAARD, Holger, DK-2300 Copenhagen (DK); MAGNUSSON, Bent, DK-3460 Birkeroed (DK); ROSSIGNOL, Helene, DK-1828 Frederiksberg (DK); SOERENSEN, Jens-Erik, DK-2900 Hellerup (DK); WOOD, Joseph M., Florida 32205 (US)
(74) Representative: James, Anthony Christopher W.P.
(86) International application number: PCT/US2008/011999
(87) International publication number: WO 2009/058207

(56) References cited:
- WO-A-01/27174
- US-A1- 2004 186 248
- US-A1- 2005 124 776
- US-A1- 2005 288 466

## Description

### BACKGROUND OF THE INVENTION

Contact lenses have been used commercially to improve vision since the 1950s. Most current contact lenses are made of hydrogels formed by polymerizing hydrophilic monomers such as HEMA and vinylpyrrolidone in the presence of a minor amount of a crosslinking agent.

Prepolymers having backbones of PVA and reactive groups of acrylic groups have been disclosed. Prepolymers containing 2-hydroxethyl methacrylate repeat units either alone as well as copolymers with other monomers or co-reactants have also been disclosed.

### DESCRIPTION OF THE FIGURES

Figures 1-4 and 6-10 are graphs showing the percent conversion as a function of time for the reaction mixtures of Examples 1 through 10, respectively.
Figure 5 is a graph showing the percent conversion as a function of time for the batch reaction mixture of Comparative Example 1.

### SUMMARY OF THE INVENTION

The present invention relates to a process for forming a prepolymer from at least one first component having a reaction rate constant k₁ and at least one second component having a reaction rate constant, k₂ which is less than 0.5k₁, characterized in that said process comprises either: (a) adding under prepolymer forming conditions, to a second mixture comprising a solvent, a first mixture comprising said at least one first component, said at least one second component, at least one polymerization initiator and optionally at least one solvent; or (b) adding, under prepolymer forming conditions, a first mixture comprising said at least one first component, to a second mixture comprising at least one solvent and said at least one second component, wherein said adding step is controlled to achieve substantially matched conversion rates of said first and second components to said prepolymer throughout said adding step.

The process of the present invention may further comprise: forming a first mixture comprising at least one solvent, at least a portion of polymerization initiator, and a portion of said first and second reactive components comprising between 1 and about 40 wt% of said at least one first component based upon all of the first component to be added during said process, wherein the second and first components are present in the first reaction mixture in a ratio of at least k₁/k₂; and adding under prepolymer forming conditions, a second mixture comprising any remaining portion of the reactive components and the initiator.

### DESCRIPTION OF THE INVENTION

As used herein the term (meth)acrylate refers to groups having the formula CH₂=CRCOX-, where R is hydrogen or methyl and X is O or N.

By "biomedical device" what is meant is any device designed to be used while in or on either or both human tissue or fluid. Examples of such devices include, without limitation, stents, implants, catheters, wound dressings and ophthalmic lenses. In one embodiment, the biomedical device is an ophthalmic device. Ophthalmic devices are any devices which reside in or in contact with any part of the ocular environment, such as the cornea, conjunctiva, eyelids, puncta or any combination thereof. Examples of ophthalmic devices include, without limitation, contact lenses, such as hard and soft contact lenses, punctal plugs, ocular inserts, intraocular lenses and the like. In one embodiment, the device is a contact lens.

Applicants have found that certain silicone-containing prepolymeric materials can have an impact on the optical quality of the resulting ophthalmic devices. Surprisingly, it has been found that by controlling the rate of addition of the prepolymer components, ophthalmic devices made from said prepolymers display substantially reduced optical distortions.

The present invention relates to processes for forming random prepolymers, in one embodiment those where optical properties are desirable, from reactive components having substantially different reaction rate constants, k. In one embodiment, the present invention relates to random prepolymers which are useful for forming optical devices, such as ophthalmic lenses. In yet another embodiment, the present invention relates to prepolymers which are useful for forming contact lenses and particularly hydrogel contact lenses.

As used herein, "prepolymers" are any material formed by vinyl or addition polymerization. Prepolymers may have molecular weights from about 20,000 to about 200,000, and in some embodiments from about 25,000 to about 150,000. In one embodiment, the prepolymers are functionalized and comprise free radical reactive groups.

The present invention relates to controlling the addition of prepolymer forming components which have reaction rate constants, k, which are substantially different to form random prepolymers. As used herein "substantially different" means that at least one first component has a reaction rate constant, k₁, which is at least 50% greater than the reaction rate constant, k₂ at least one second component. Thus, in one embodiment, k₂≤ < 0.5k₁. In another embodiment k₂≤ 0.2k₁. Reaction rate constants may be measured as follows. The prepolymer reaction components are reacted under batch conditions using the reaction conditions (temperature, solvent system, component concentration, including polymerization initiator) to be used to make the prepolymer. Samples of the reaction mixture are taken at ten minute intervals and analyzed for the concentration of the component(s) being analyzed. Samples should be taken at least though 50% conversion of the second component. For reactions which are completed within less than about 1 hour, the evaluation should be repeated with samples taken at shorter intervals, to provide at least about 10 data points.

The reaction rate constant, k, is the negative of the slope of the line of the natural log (ln) of the component concentration plotted against reaction time. The component concentration may be measured in any units, such as weight %, mole% or the peak area provided from a GC method in which the peak area is proportionate to the concentration.

In one embodiment, the random prepolymers are formed from free radical reactive components. Suitable examples first components include (meth)acrylate containing reactive components, styrene containing reactive components, mixtures thereof and the like. Examples of suitable first components including silicone-containing (meth)acrylate monomers and hydrophilic (meth)acrylate components.

Second components are any free radical reactive components which have a reaction rate constant, k₂, as defined above. Examples of suitable second components include (meth)acrylamide monomers, such as silicon-containing (meth)acrylamide monomers and hydrophilic (meth)acrylamide components and vinyl containing components such as N-vinyl lactams and N-vinyl amides, combinations thereof and the like. Examples of such compounds include, but are not limited to N,N-dimethacrylamide, N-vinyl pyrrolidone, N-vinyl-N-methyl acetamide, VINAL, TRIS-VC, combinations thereof and the like.

Silicon-containing (meth)acrylate monomers contain at least one (-Si-O-] and one (meth)acrylate group. In one embodiment, the total Si and attached O are present in the silicone-containing (meth)acrylate monomer in an amount greater than about 20 weight percent, and in some embodiments greater than 30 weight percent of the total molecular weight of the silicone-containing (meth)acrylate monomers. The silicon-containing (meth)acrylate monomers may also comprise hydrophilic groups, such as hydroxyl, amine, and C1-5 alkyl groups or C6-10 aryl groups, either of which may be substituted with halogen, hydroxyl, amine, ethers containing 1-4 carbons or esters containing 1-4 carbons. In some embodiments at least one silicon-containing (meth)acrylate monomer comprises at least one hydroxyl or C1-5 alkyl substituted with hydroxyl.

Examples of suitable silicon-containing (meth)acrylate monomers include polydialkyl siloxane ("PDMS") type monomers, which comprise at least two [-Si-O-] repeating units, silicone alkyl glycerol (meth)acrylate ("SiGMA") type monomers which comprise a polymerizable group having an average molecular weight of about less than 2000 Daltons, a hydroxyl group and at least one "-Si-O-Si-" group and trimethyl siloxy ("TRIS") type monomers which comprise at least one Si(OSi-)₃ group. Examples of suitable TRIS monomers include methacryloxypropyltris(trimethylsiloxy)silane, methacryloxypropylbis(trimethylsiloxy)methylsilane, methacryloxypropylpentamethyldisiloxane, mixtures thereof and the like.

In one embodiment, the PDMS type monomers are linear, mono-alkyl terminated monomers ("mPDMS monomers") comprising Si and attached O in an amount greater than 20 weight percent, and more preferably greater than 30 weight percent of the total molecular weight of the silicone-containing monomer.

Examples of suitable mPDMS monomers include: 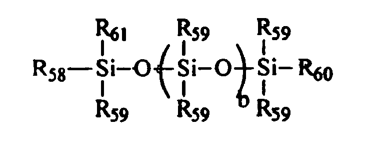 where b = 0 to 100, where it is understood that b is a distribution having a mode approximately equal to a stated value, in one embodiment 3 to 30, in another 4 to 16, and in another 6 to 14;
R₅₈ comprises a methacrylate moiety;
each R₅₉ is independently a C₁₋₅ monovalent alkyl, or C₆₋₁₀aryl group, which may be further substituted with alcohol, amine, ketone, carboxylic acid or ether groups;
R₆₀ is a C₁₋₅ monovalent alkyl, or C₆₋₁₀aryl group, which may be further substituted with alcohol, amine, ketone, carboxylic acid or ether groups; and
R₆₁ is independently C₁₋₅ alkyl or C₆₋₀ aromatic, and in some embodiments is selected from ethyl, methyl, benzyl, phenyl, or a monovalent siloxane chain comprising from 1 to 100 repeating Si-O units.

In some embodiments each R₅₉ is independently selected from C₁₋₅ unsubstituted monovalent alkyl or C₆₋₁₀ unsubstituted aryl groups, and in another embodiment, each R₅₉ is methyl.

In some embodiments R₆₀ is C₁₋₁₀aliphatic alkyl or C₆₋₁₀aromatic group either of which may be unsubstituted or include hetero atoms, in another embodiment a C₃₋₈ alkyl groups. In another embodiment R₆₀ is butyl.

Examples of mPDMS type monomers include mono-(3-methacryloxy-2-hydroxypropyloxy)propyl terminated, mono-butyl terminated polydimethylsiloxanes; monomethacryloxypropyl terminated mono-n-butyl terminated polydimethylsiloxanes, and combinations thereof. Additional examples of mPDMS type monomers are disclosed in US 5,998,498, which is incorporated herein by reference.

In another embodiment, the at least one silicone methacrylate comprises at least one SiGMA type monomer. In the SiGMA type monomer, silicon and its attached oxygen comprise about 10 weight percent of said monomer, and in some embodiments more than about 20 weight percent. Examples of SiGMA type monomers include monomers of Formula II: 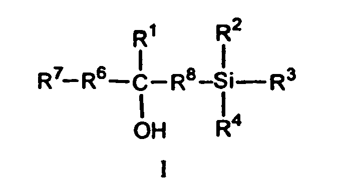 Wherein R₇ is a (meth)acrylate group;
R₆ is an alkylene having one to eight carbon atoms which may optionally comprise ether or hydroxyl groups;
R₈ is an alkylene having one to ten carbon atoms which may optionally comprise ether or hydroxyl groups; and
R1 is a H, or monovalent alkyl having up to six carbon atoms;
R₂, R₃ and R₄ are independently selected from methyl, ethyl, benzyl, phenyl or a monovalent trialkyl siloxane, provide however, that at least one of R₂, R₃ and R₄ is a monovalent trialkyl siloxane.

Specific examples of suitable SiGMA type monomers include 2-propenoic acid, 2-methyl-2-hydroxy-3-[3-[1,3,3,3-tetramethyl-1-[trimethylsilyl)oxy]disiloxanyl]propoxy]propyl ester 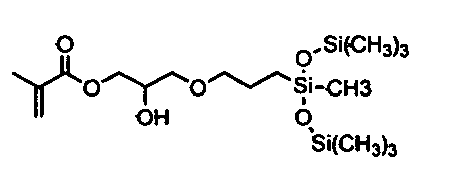 and (3-methacryloxy-2-hydroxypropyloxy)propyltris(trimethylsiloxy)silane

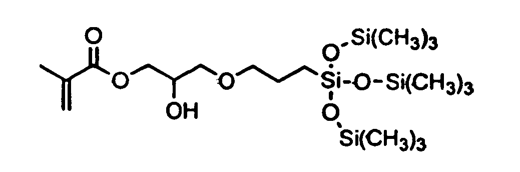

Additional suitable hydroxyl-functionalized silicone containing monomers are disclosed in U.S. Patent 4,235,985 4,139,513 and 4,139,692 which are hereby incorporated by reference.

Yet further examples of SiGMA type monomers include, without limitation 3-methacryloxy-2-((2-hydroxyethoxy)propyloxy)propylbis(trimethylsiloxy)methylsilane 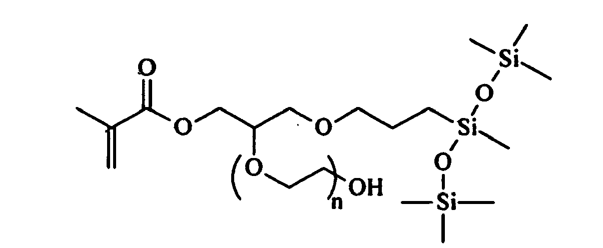 where n is 1-15,
3-methacryloxypropyltris(trimethylsiloxy)silane; 3-methacryloxypropyl(pentamethyldisiloxane); 3-methacryloxypropylbis(trimethylsiloxy)methylsilane, mixtures thereof and the like.

In some embodiments the silicone-containing component is the (meth)acrylamide component. Examples of silicon-containing (meth)acrylamide components include tris(trimethylsiloxy)silylpropyl vinyl carbamate, silicone-containing vinyl carbonates, such as those disclosed in US 5,260,000 and combinations thereof.

In one embodiment the at least one silicon-containing (meth)acrylate monomer is substituted with at least one hydroxyl or at least one C1-5 alkyl substituted with at least one hydroxyl. In another embodiment, the at least one silicon-containing (meth)acrylate monomer comprises a monomer selected from 3-methacryloxy-2-(hydroxypropyloxy)propylbis(trimethylsiloxy)methylsilane), 3-methacryloxy-2-(hydroxypropyloxy)propyltris(trimethylsiloxy)silane, mono-(3-methacryloxy-2-hydroxypropyloxy)propyl terminated, mono-butyl terminated polydimethylsiloxanes; monomethacryloxypropyl terminated mono-n-butyl terminated polydimethylsiloxanes; and mixtures thereof.

The silicon-containing components are present in the reaction mixture in amounts between about 20 and about 80 weight %, in some embodiments between about 30 and about 80 weight % and in others between about 40 and about 70 weight %, based up the total amount of all reactive components.

The random prepolymer of the present invention also comprises repeating units derived from at least one hydrophilic monomer. Hydrophilic monomers are those which when homopolymerized with an appropriate catalyst form a polymer with a water content of at least about 20%. The hydrophilic monomer may comprise (meth)acrylate reactive components, (meth)acrylamides components and mixtures thereof. Examples of (meth)acrylamide hydrophilic monomers include but are not limited to N,N-dimethylacrylamide, N-vinylpyrrolidone, N-vinylmethacetamide, 2-hydroxyethyl methacrylamide, 2-vinyl-4,4-dimethyl-2-oxazoline-5- one, N-vinyloxycarbonyl alanine and combinations thereof. Examples of (meth)acrylate hydrophilic monomers include but are not limited to 2-hydroxyethyl methacrylate, glycerol monomethacrylate, polyethyleneglycol monomethacrylate, methacrylic acid, acrylic acid, and combinations thereof. In one embodiment the hydrophilic monomer comprises at least one hydrophilic (meth)acrylate monomer selected from 2-hydroxyethyl methacrylate, glycerol monomethacrylate, polyethyleneglycol monomethacrylate and combinations thereof. In another embodiment, the hydrophilic (meth)acrylate monomer comprises 2-hydroxyethyl methacrylate.

The hydrophilic monomers are present in the reaction mixture in amounts between about 20 and about 80 weight %, in some embodiments between about 20 and about 70 weight % and in others between about 30 and about 60 weight %, based upon all reactive components at the end of addition.

In one embodiment the present invention relates to processes for forming random prepolymers from (meth)acrylate containing reactive components comprising
40 -70% by weight of one or more silicone-containing (meth)acrylate monomers,
30 -60% by weight of one or more hydrophilic monomers comprising, and
0-5% by weight of one or more other (meth)acrylate-based monomers, wherein the monomers in total amounts to 100%.

In another embodiment the reactive components comprise
40 -70% by weight of one or more silicone-containing (meth)acrylate monomers comprising 3-methacryloxy-2-(hydroxypropyloxy)propylbis(trimethylsiloxy)methylsilane), mono-(3-methacryloxy-2-hydroxypropyloxy)propyl terminated, or mixtures thereof,
30 -60% by weight of one or more hydrophilic monomers comprising 2-hydroxyethyl methacrylate and N,N-dimethyl acrylamide, and
0-5% by weight of one or more other (meth)acrylate-based monomers, wherein the monomers in total amounts to 100%.

Other (meth)acrylate monomers may also be included. In addition to the (meth)acrylate reactive group, the monomers may also provide additional functionality, such as tinting, UV absorption, photochromicity, wetting, combinations thereof and the like.

Initiators may also be used. Any desirable initiators may be used including, without limitation, thermally activated initiators, UV and/or visible light photoinitiators and the like and combinations thereof. Suitable thermally activated initiators include lauryl peroxide, benzoyl peroxide, isopropyl percarbonate, azobisisobutyronitrile, 2,2-azobisisobutyronitrile, 2,2-azobis-2-methylbutyronitrile and the like. In one embodiment the initiators comprise 2,2-azobis-2-methylbutyronitrile (AMBM) and/or 2,2-azobisisobutyronitrile (AIBN).

The initiator is used in the reaction mixture in effective amounts, e.g., from about 0.005 to about 2 weight percent, and preferably from about 0.1 to about 2 parts by weight per 100 parts of reactive monomer.

The polymerization is conducted in any solvent, which is capable of dissolving the monomers and the resulting random prepolymer during the polymerization. Examples of solvents and solvent systems are ethanol, iso-propanol, 1-methoxy-2-propanol, tert-amyl alcohol, ethanol/heptane mixtures, e.g. (ethanol/heptane 3:1). Highly preferred are the solvents and solvent mixtures having a boiling point between about 50°C and about 110°C, and in some embodiments between about 60°C and about 80°C.

The solvent system may be heated to increase the reaction rate, for example to a temperature in the range of about 50°C to about 110°C and in some embodiments to a temperature between about 60 and about 80°C.

Processes for forming prepolymers from reaction mixtures comprising both silicon-containing (meth)acrylate monomers and hydrophilic monomers have been disclosed in US-2003-0236376, the disclosure of which is incorporated herein by reference. However, silicone hydrogel contact lenses made from these prepolymers can display undesirable optical properties, which can produce distorted images. Applicants have found that by controlling the polymerization conditions to insure that conversion rates of the first and second components are substantially matched prepolymer chains having substantially equal composition of both first and second components may be formed. When addition of the first and second components is not controlled according to the present invention, polymer chains formed at the beginning of the reaction have a higher concentration of first component and polymer chains formed at the end have a higher concentration of the second component. Controlling the addition of the first and second components according to the present invention has also been surprisingly found to eliminate undesirable optical distortions in articles formed from prepolymers of the present invention.

The addition of at least the first and second components may be achieved in a number of ways. The addition may be controlled by metering one mixture into the other on a continuous or periodic basis, and may be controlled using conventional equipment such as, but not limited to metering pumps. The addition may be further controlled by balancing the concentration of the first and second components in the first and second mixtures as is described herein.

Thus, in one embodiment, the reactive components and the polymerization initiator are gradually added to the solvent system over a period of time so that addition of an accumulated amount of about 50% by weight of the reactive components is reached within about 0.5 to about 5 hours from initiation of the addition of reactive components.

Accordingly, as used herein, "gradual addition" means that the reactive components are added over time, e.g. in smaller portions, and may be added either continuously or intermittently. It is further understood that the different reactive components may be added in combination or the addition of the components may be alternated.

In another embodiment, the reactive components and the polymerization initiator are added to the solvent system over a period of time so that addition of all of the reactive components (an accumulated amount of 100% by weight) is reached within about 2 to about 24 hours from initiation of the addition of reactive components.

In another embodiment, the second component is mixed with the solvent at the beginning of the reaction and the remaining reactive components are gradually added over the desired reaction time, as described above.

For example, in the formulation of Example 1, having (meth)acrylate monomers OH-mPDMS, 2-hydroxyethyl methacrylate, (meth)acrylamide monomer N,N-dimethyl acrylamide (DMA) and other (meth)acrylate-based monomers, Norbloc and Blue HEMA, DMA has the slowest conversion under the conditions used in Example 1. The reaction rate constant for DMA was found to be 0.1795 hr⁻¹, as compared to 1.1433 hr⁻¹, for HEMA. Thus, in this embodiment, the total amount of DMA is present in the solvent system before the dosing of the other (meth)acrylate monomers begins.

The remaining portion of the solvent, monomers and initiator is gradually added, as described in any of the embodiments described above.

In one embodiment, the first reaction mixture also comprises at least a portion of the initiator.

In another embodiment the present invention relates to processes wherein the first mixture comprising at least one solvent, at least a portion of polymerization initiator, and a portion of reactive components comprising (a) between 1 and about 40 weight% of at least one first component based upon all of the first component to be added during said process and (b) a portion of said second component wherein the ratio of the concentrations of second and first components in the first reaction mixture is equal to or greater than the ratio of k₁/k₂. A second mixture comprising any remaining portion of the reactive components and the initiator is added to said first mixture at a rate sufficient to substantially match, throughout the adding step, conversion of the first and second components to a prepolymer.

In one embodiment, the present invention relates to processes for forming random prepolymers from (meth)acrylate containing reactive components comprising 40 -70% by weight of one or more silicone-containing (meth)acrylate monomers, 30 -60% by weight of one or more hydrophilic monomers, and 0-5% by weight of one or more other (meth)acrylate-based monomers, based upon the total weight of the monomers in the reaction mixture.

For example, in one embodiment where the (meth)acrylate monomers comprise 60 wt% OH-mPDMS, 11.5 wt % 2-hydroxyethyl methacrylate, 27 wt% N,N-dimethyl acrylamide (DMA), DMA has the lowest reaction rate. The relative ratio between the reaction rate constant of DMA and any of the other monomer constituents is above 1:3, and as shown above the ratio of k_{HEMA}:k_{DMA} is about 6. In this embodiment, (such as disclosed in Examples 7 and 10) at least a portion of the DMA is present in the first reaction mixture and the (meth)acrylate components and remaining (meth)acrylamide are introduced into the reaction mixture gradually. Hence, in the present embodiment, HEMA may be present in the first reaction mixture in an amount between about 1 to about 40 weight % based upon all HEMA to be added throughout the reaction mixture. Additional (meth)acrylate components may also be included in the first reaction mixture. The second component, DMA in this case, may be present in amounts such that the ratio of [DMA]:[HEMA] is at least about k_{HEMA}:k_{DMA} or greater. Thus, in this examples, DMA may be present in the first mixture in an amount between about 5 and about 100 weight% based upon the weight of all DMA added throughout reaction.

The remaining monomers are mixed with an appropriate solvent and added gradually over the course of the reaction as described herein.

Automated dosing systems may be used. For example, pumps may be used to control the addition of the (meth)acrylate monomer components. Configurations include a pump for each (meth)acrylate monomer component, a pump for each type of (meth)acrylate monomer, or a pump for the reaction mixture. The initiator may either be mixed with the monomer components before-hand, or may be added separately, which in some embodiments is preferred. Both the monomer and the initiator can be diluted with the solvent system prior addition.

When the addition of the second reaction mixture is complete, the reactive components and polymer typically constitute about 10 and about 50% by weight of the polymer solution, and in some embodiments between about 15 and about 40% by weight.

Polymerization is conducted under prepolymer polymerization conditions, such as in the presence of a free radical initiator and a suitable radiation source, at temperatures between about 50° and about 110°C. The upper limit will be determined by the pressure limitation of the equipment available and the ability to handle the polymerization exotherm. The lower limit will be determined by the maximum acceptable reaction time and/or properties of initiator. For polymerization at about ambient pressure a preferred temperature range is between about 60° to about 80°C and for times necessary to provide the desired degree of conversion. Reaction times may range between about 1 and about 24 hours, and in some embodiments between about 1 and about 12 hours.

In some embodiments chain transfer agents are excluded from the reaction. In this case alcohols are used as the solvent, preferably alcohols having one to four carbon atoms, and preferably the solvent is methanol, ethanol, isopropanol and mixtures thereof.

The random prepolymer formed via the present invention may be purified via fractionation as disclosed in US 4,963,159, US-2003/0236376.

Fractionation may be followed by additional conventional separation means such as filtration, centrifugation and the like. If further separation is desired the fractionation can be repeated by further lowering of the solvent parameters.

In one embodiment, the random prepolymers of the present invention may be functionalized and purified to form crosslinkable prepolymers, which may be used to make medical devices, such as ophthalmic devices, such as contact lenses. In another embodiment, the random prepolymers of the present invention may be macromers and prepolymers, such as silicone and fluorine containing methacrylate based macromers, such as those disclosed in US5,760,100, GTP macromers, such as those disclosed in US 5,314,960, US 5,331,067, 5,244,981, US 5,371,147.

The crosslinkable prepolymers can have well-defined polydispersity and molecular weight. As but one example, the crosslinkable prepolymers can have acrylic groups which can be crosslinked by photopolymerization in an extremely short time to form contact lenses with very desirable properties so far unobtainable by conventional methods.

The random prepolymer is functionalized to form a crosslinkable prepolymer by attaching a crosslinkable functional group thereto. Generally the functional group provides the ability to crosslink and form crosslinked polymers or hydrogels to the prepolymer. Suitable crosslinkable reactants that provide the crosslinkable functional groups have the structure A-S-F, where A is an attaching group which is capable of forming a covalent bond with a hydroxyl group in the prepolymer; S is a spacer and F is a functional group comprising an ethylenically unsaturated moiety. Suitable attaching groups, A, include chloride, isocyanates, acids, acid anhydrides, acid chlorides, epoxies, azalactones, combinations thereof and the like. Preferred attaching groups include acid anhydrides.

The spacer may be a direct bond, a straight, branched or cyclic alkyl or aryl group having 1 to 8 carbon atoms and preferably 1 to 4 carbon atoms or a polyether chain of the formula -(CH₂-CH₂-O)ₙ- where n is between 1 and 8 and preferably between I and 4.

Suitable functional groups comprise free radical polymerizable ethylenically unsaturated moieties. Suitable ethylenically unsaturated groups have the formula

-C(R¹⁰)=CR¹¹R¹²

Where R¹⁰, R¹¹ and R¹² are independently selected from H, C₁₋₆ alkyl, carbonyl, aryl and halogen. Preferably R¹⁰, R" and R¹² are independently selected from H, methyl, aryl and carbonyl, and more preferably in some embodiments selected from H and methyl.

Preferred crosslinkable reactants include methacrylic acid chloride, 2-isocyanatoethylacrylate, isocyanatoethyl methacrylate (IEM), glycidyl methacrylate, cinnamic acid chloride, methacrylic acid anhydride, acrylic acid anhydride and 2-vinyl-4-dimethylazalactone. Methacrylic acid anhydride is preferred.

Suitable amounts of the crosslinkable functional group attached to the prepolymer include from about 1 to about 20 %, and preferably between about 1.5 to about 10%, and most preferably from about 2 to about 5% on a stoichiometric basis based upon the amount of available hydroxyl groups in the prepolymer. The degree of functionalization may be measured by known methods such as determination of unsaturated groups or by hydrolysis of the bond between the functional reactant and the polymer followed by determination of the released acid by HPLC.

Depending on the attaching group selected, the functionalization may be conducted with or without a conventional catalyst. Suitable solvents include polar, aprotic solvents which are capable of dissolving the prepolymer at the selected reaction conditions. Examples of suitable solvents include dimethylformamide (DMF), hexamethylphosphoric triamide (HMPT), dimethyl sulfoxide (DMSO), pyridine, nitromethane, acetonitrile, dioxane, tetrahydrofuran (THF) and N-methylpyrrolidone (NMP). Preferred solvents include formamide, DMF, DMSO, pyridine, NMP and THF. When IEM is used the catalyst is a tin catalyst and preferably dibutyl tin dilaurate.

The functionalization reaction mixture may also contain a scavengercapable of reacting with moieties created by the functionalization. For example, when acid anhydrides are used as the attaching group, it may be beneficial to include at least one tertiary amine, a heterocyclic compound with an aprotic nitrogen or other Lewis bases to react with the carboxyl group which is generated. Suitable tertiary amines include pyridine, triethylenediamine and triethylamine, with triethylamine being preferred. If included the tertiary amine may be include in a slight molar excess (about 10%). In a preferred embodiment the solvent is NMP, the reactant is methacrylic acid anhydride, acrylic acid anhydride or a mixture thereof and triethylamine is present. The most preferred reactant is methacrylic acid anhydride.

The reaction is run at about room temperature. Each functional group will require a specific temperature range, which is understood by those of skill in the art. Ranges of about 0°C and 50°C and preferably about 5°C and about 45°C are suitable. Ambient pressures may be used. For example, when the crosslinkable functional group is an acid anhydride the functionalization is conducted at temperatures between about 5°C and about 45 °C and for times ranging from about 20 to about 80 hours. It will be appreciated by those of skill in the art, that ranges outside those specified may be tolerated by balancing the time and temperatures selected.

The reaction is run to produce a crosslinkable prepolymer.

Apart from attaching crosslinkable side groups, other side groups may provide additional functionality including, but not limited to photoinitiators for crosslinking, pharmaceutical activity and the like. Still other functional groups may contain moieties that can bind and/or react with specific compounds when the crosslinked gels are used in analytical diagnostic applications.
Once the crosslinkable prepolymer has been formed, substantially all unreacted reactants and byproducts should be removed. By "substantival all" we mean that less than about 0.1 weight% remains after washing. This can be done by conventional means, such as ultrafiltration. Alternatively, the cross-linkable prepolymer may be purified by slowly pouring the cross-linkable prepolymer reaction product, still dissolved in the selected solvent (which in some embodiments may be N-methylpyrrolidone) into water, in some embodiments deionized water, such that a thin liquid string having a maximum dimension of about 1 mm in at least one direction. This dimension will allow a relatively fast diffusion of solvent from the polymer string into the water- rendering the polymer string non-tacky. The pouring may be done via a dosing pump through a nozzle, which ensures the correct dimensions of the polymer string. The shape of the nozzle is not critical so long as the maximum dimension is achieved. The amount of water relative to the solution of the functionalized prepolymer is typically at least 10:1, and in some embodiments between about 20:1 to about 500: 1.

The functionalized prepolymer may be further purified by washing, typically conducted with a water, to solid polymer material ratio of at least at least 10:1, such as 20:1 to 500:1. Each wash can be conducted for at least 10 minutes, and in some embodiments an hour. After washing the functionalized prepolymer may be dried, for example, in one embodiment for 20 to 48 hours at room temperature, and a reduced pressure (10-50 mBar).

Once the crosslinkable prepolymer has been purified it is then dissolved in a water replaceable diluent to form a viscous solution. The diluent should function as a medium in which the crosslinkable functionalized prepolymer can be dissolved and in which the crosslinking reaction or cure can take place. The diluent should be nonreactive. Suitable diluents include those capable of dissolving, at or below 65°C, between about 30 weight % to about 60 weight % crosslinkable prepolymer based upon the total weight of the viscous solution. Specific examples include alcohols having one to ten carbon atoms, alcohol ethers having five to fifteen carbon atoms, and mixtures thereof. For hydrogels, diluents should be added to the crosslinkable prepolymer in an amount which is approximate or equal to the amount of water present in the final hydrogel. Diluent amounts between about 40 and about 70 weight % of the resulting viscous solution are acceptable.

Viscous solutions of the present invention have a viscosity of about 5,000 cps to about 1,000,000 cps at 25°C, and in some embodiments between about 5,000 cps to about 200,000 cps at 25°C.

A polymerization initiator may also be added. The initiator may be any initiator that is active at the processing conditions. Suitable initiators include thermally activated, photoinitiators (including UV and visible light initiators) and the like. Suitable thermally activated initiators include lauryl peroxide, benzoyl peroxide, isopropyl percarbonate, azobisisobutyronitrile, 2,2-azobis isobutyronitrile, 2,2-azobis 2-methylbutyronitrile and the like. Suitable photoinitiators include aromatic alpha hydroxyketone or a tertiary amine plus a diketone. Illustrative examples of photoinitiator systems are 1-hydroxycyclohexylphenyl ketone, 2-hydroxy-methyl-1-phenyl-propan-1-one, benzophenone, thioxanthen-9-one, a combination of camphorquinone and ethyl-4-(N,N-dimethylamino)benzoate or N-methyldiethanolamine, hydroxycyclohexyl phenyl ketone, bis(2,4,6-trimethylbenzoyl)-phenyl phosphine oxide and bis(2,6-dimethoxybenzoyl)-2,4,4-trimethylpentyl phosphine oxide, (2,4,6-trimethylbenzoyl)diphenyl phosphine oxide and combinations thereof and the like. Photoinitiation is a preferred method and bis(2,6-dimethoxybenzoyl)-2, 4, 4-trimethylpentyl phosphine oxide, bis(2,4,6-trimethylbenzoyl)-phenyl phosphine oxide and 2-hydroxy-methyl-1-phenyl-propan-1-one are preferred photoinitiators. Other initiators are known in the art, such as those disclosed in US 5,849,841, at column 16, the disclosure of which is incorporated herein by reference.

Other additives which may be incorporated in the prepolymer or the viscous solution include, but are not limited to, ultraviolet absorbing compounds, reactive dyes, organic and inorganic pigments, dyes, photochromic compounds, release agents, antimicrobial compounds, pharmaceuticals, mold lubricants, wetting agents, other additives desirable to maintain a consistent product specification, combinations thereof and the like. These compositions may be added at nearly any stage and may be copolymers, attached or associated or dispersed.

The viscous solution should preferably not contain compounds such as free monomers which can, during cure, give polymer material which is not bound up in the network and/or will give residual extractable material.

In a solution of a polymer the rheological properties are to a high degree determined by the longest molecules. The prepolymerof the present invention is low in molecules of very high molecular weight and this gives their solutions a number of desirable properties.

The prepolymer of the present invention may be used as starting materials for making functionalized prepolymers and hydrogels, binders for tints in contact lenses, binders in inks for tampo and ink jet printing and the like.

The viscous solution of the present invention may be used to form a variety of articles. For example molded articles, profiles, preforms, parisons, films, fiber, tubing, sheet, coatings and the like. More specifically, suitable articles include biomedical devices, medical grade coatings, polymers with reactive groups or biological assay markers which are bound to the polymer and the like.

As used herein, a "biomedical device" is any article that is designed to be used while either in or on mammalian tissues or fluid. Examples of these devices include but are not limited to catheters, implants, stents, fluid collection bags, sensors, hydrogel bandages, tubing, coatings for any of the preceding articles, carriers for antibiotic, diagnostic and therapeutic agents, and ophthalmic devices. A class of preferred biomedical devices include ophthalmic devices, particularly contact lenses.

As used herein, the terms "lens" and "ophthalmic device" refer to devices that reside in or on the eye. These devices can provide optical correction, wound care, drug delivery, diagnostic functionality or may be cosmetic. The term lens includes but is not limited to soft contact lenses, hard contact lenses, intraocular lenses, overlay lenses, ocular inserts, optical inserts and spectacle lenses.

A number of methods may be used to form the articles of the present invention including injection molding, extrusion molding, spin casting, extrusion coating, closed mold molding, cast molding, combinations thereof and the like. The forming method will be followed by a curing step, described below.

In one embodiment of the present invention the prepolymer solution is used to form a lens. The preferred method for producing a lens from the viscous solution of the present invention is via direct molding. A lens-forming amount of the prepolymer solution is dispensed into a mold having the shape of the final desired hydrogel. The mold may be made from any suitable material including, without limitation, polypropylene, polystyrene and cyclic polyolefins.

By "lens-forming amount" is meant an amount sufficient to produce a lens of the size and thickness desired. Typically, about 10 to about 50 µl of viscous solution is used per contact lens. Next the mold parts are assembled such that the viscous liquid fills the mold cavity. A benefit of the present invention is that the hold time necessary between assembling the mold parts and curing is very short.

The mold containing the viscous solution is exposed to ionizing or actinic radiation, for example electron beams, X-rays, UV or visible light, ie. electromagnetic radiation or particle radiation having a wavelength in the range of from about 280 to about 650 nm. Also suitable are UV lamps, HE/Cd , argon ion or nitrogen or metal vapor or NdYAG laser beams with multiplied frequency. The selection of the radiation source and initiator are known to those of skill in the art. Those of skill in the art will also appreciate that the depth of penetration of the radiation in to the viscous solution and the crosslinking rate are in direct correlation with the molecular absorption coefficient and concentration of the selected photoinitiator. In a preferred embodiment the radiation source is selected from UVA (about 315 - about 400 nm), UVB (about 280-about 315) or visible light (about 400 -about 450 nm), at high intensity. As used herein the term "high intensity" means those between about 100 mW/cm² to about 10,000 mW/cm². The cure time is short, generally less than about 30 seconds and preferably less than about 10 seconds. The cure temperature may range from about ambient to elevated temperatures of about 90°C. For convenience and simplicity the curing is preferably conducted at about ambient temperature. The precise conditions will depend upon the components of lens material selected and are within the skill of one of ordinary skill in the art to determine.

The cure conditions must be sufficient to form a polymer network from the crosslinkable prepolymer. The resulting polymer network is swollen with the diluent and has the form of the mold cavity.

Once curing is completed, the molds are opened. Post molding purification steps to remove unreacted components or byproducts are either simplified compared to conventional molding methods, or are not necessary in the present invention. If a biocompatible diluent is used no washing or evaporating step is required at this phase either. It is an advantage of the present invention that when a biocompatible diluent is used, both post molding extraction and diluent exchange steps are not required. If a low boiling diluent is used, the diluent should be evaporated off and the lens hydrated with water.

The resulting lenses comprise a polymer network, which when swelled with water becomes a hydrogel. Hydrogels of the present invention may comprise between about 20 to about 75 weight% water, and preferably between about 20 to about 65 weight% water. The hydrogels of the present invention have excellent mechanical properties, including modulus and elongation at break. The modulus is at least about 20 psi, preferably between about 20 and about 200 psi, and more preferably between about 20 and about 150 psi.

The elongation at break is greater than about 100% and preferably greater than about 120%.

Lenses thus produced may be transferred to individual lens packages containing a buffered saline solution. The saline solution may be added to the package either before or after transfer of the lens. Lenses containing a biocompatible diluent will, upon standing in the saline solution, exchange the diluent with water, forming the desired hydrogel. This may also be accomplished in a separate step, if desired. While stored in the package, the polymer network will take up a specific amount of water determined by the hydrophilicity of the polymer. The equilibrium water content(expressed in weight % of the hydrated lens) may be higher or lower than the amount of the diluent present during curing. Typical hydrogels which are useful for making contact lenses comprise between about 20 and about 75 weight % water. The hydrogel may thus expand or contract when in equilibrium in water. It is, however, an essential feature that although the size may change, the shape of the fully hydrated article will be a true reproduction of the shape of the mold cavity.

Appropriate packaging designs and materials are known in the art. A plastic package is releasably sealed with a film. Suitable sealing films are known in the art and include foils, polymer films and mixtures thereof.

The sealed packages containing the lenses are then sterilized to ensure a sterile product. Suitable sterilization means and conditions are known in the art, and include, for example, autoclaving.

It will be appreciated by those of skill in the art that other steps may be included in the molding and packaging process described above. Such other steps can include coating the formed lens, surface treating the lens during formation (for example via mold transfer), inspecting the lens, discarding defective lenses, cleaning the mold halves, reusing the mold halves, combinations thereof and the like. Processes and coating compositions are disclosed in of U.S. Patents 3,854,982; 3,916,033; 4,920,184; and 5,002,794; 5,779,943, 6,087,415; WO 91/04283, and EPO 93/810,399, which are incorporated herein by reference.

As used herein the term "hydrogel" means a hydrated crosslinked polymeric system that contains water in an equilibrium state. Hydrogels typically are oxygen permeable and biocompatible, making them preferential materials for producing biomedical devices and in particular contact or intraocular lenses.

In the present application all molecular weights are to be understood as molecular weights determined by the gel permeation chromatography(GPC) analysis (also called Size Exclusion Chromatography). The SEC equipment is composed of a PE LC series 200 pump and a series 200 autosampler. The detector is a RI Varian Star 9040.

The column combination consists of two PL-Gel columns from Polymer Laboratories (MIXED-C + MIXED-D) and a guardcolumn.

The eluent is THF stabilized with BHT.

The flow rate is 0.1 mL/minute. The injection volume is 100 µL and the run time is 30 minutes.

The calibration curve is obtained with third order regression using PS of Peak molecular weights ranging from 6035000 to 580 as standard references. These polymer standards are purchased from Polymer Laboratories Inc, Amherst MA.

Peak integrations are manually made. Integration start and end points are manually determined from significant difference on global baseline. Result reports give M_{z}, M_{w}, Mₙ, and Mₚₑₐₖ in PS units.

The injection solutions are prepared with THF to give a polymerconcentration of approximately 10mg/mL.

In the present invention polydispersity, Pd of a polymer sample is defined as
Pd = M_{w} / Mₙ. The peak molecular weight Mp is the molecular weight of the highest peak in the molecular weight distribution curve.

The tensile properties (elongation and tensile modulus) are measured using the crosshead of a constant rate of movement type tensile testing machine equipped with a load cell that is lowered to the initial gauge height. A suitable testing machine includes an Instron model 1122. A dog-bone shaped sample having a 0.522 inch length, 0.276 inch "ear" width and 0.213 inch "neck" width is loaded into the grips and elongated at a constant rate of strain of 2 in/min. until it breaks. The initial gauge length of the sample (Lo) and sample length at break (Lf) are measured. Twelve specimens of each composition are measured and the average is reported. Percent elongation is = [(Lf-Lo)/Lo]x 100.

Tensile modulus is measured at the initial linear portion of the stress/strain curve.

The viscosity is measured using a Haake RS100 RheoStress equipped with a Haake circulation bath and temperature controller. The complex viscosity is measured by conducting a frequency sweep starting at 40 Hz, going down to 1 mHz and up again to 40 Hz, picking up 3 frequencies per decade, repeating each frequency three times and waiting one period between each measurement. The measurements are conducted at 25°C +1°C, using a parallel plate geometry having a 20 mm diameter and a 0.7 mm gap size (sample thickness), which corresponds to a sample volume of ca. 0.22 mL. With reference to Cox-Mertz rule (John Ferry, Visco-elastic properties of polymers, 3rd edition, McGraw-Hill Book Company, 1980.), the reported viscosity number(η) is the low frequency value of the complex viscosity(η*).

Specifically, the HPLC equipment consists of a column oven at 25°C, a Merck L6000 pump, and a Perkin Elmer LC290 UV detector.The column combination is composed of a Merck RP18 column (125mm/4mm) and a Guardcolumn.

The mobile phase is an acetonitrile-water mixture (1/9 wt/wt) adjusted to pH 2.5 with trifluoroacetic acid. The flow rate is fixed to 1 mL/minute and the injection volume is 10 µL.

The detection is carried out at a wavelength of 230 nm. The data acquisition time is 8 minutes. Series of calibrators are generated from diluted solutions of methacrylic acid in mobile phase of concentration ranging from 5 to 25 ppm.

The injection solutions are prepared from the hydrolysis samples diluted with mobile phase and 10 mL HCl, 1M. The solutions are filtered on 13 mm GD/X 0,45µm Whatmann filters before the injection is performed.

The following examples do not limit the invention. They are meant only to suggest a method of practicing the invention. Those knowledgeable in the field of contact lenses as well as other specialties may find other methods of practicing the invention. However, those methods are deemed to be within the scope of this invention.

The following abbreviations are used in the examples.

| AMBM | |
|---|---|
| DMF | *N,N*-dimethylformamide |
| EtOH | ethanol |
| HEMA | 2-hydroxyethyl methacrylate |
| HO-PDMS | mono-(3-methacryloxy-2-hydroxypropyloxy)propyl terminated, mono-butyl terminated polydimethylsiloxan |
| Norbloc | 2-(2'-hydroxy-5-methacrylyloxyethylphenyl)-2H-benzotriazole |
| Blue HEMA | the reaction product of reactive blue number 4 and HEMA, as described in Example 4 or U.S. Pat. no. 5,944,853 |

### Examples 1-4

Prepolymers were formed from the monomers listed in Table 1. AMBM was used as an initiator. The reactions were conducted in a 3-necked I L round-bottomed glass reactor equipped with a magnetic stirrer, reflux condenser and inlet for dosing of monomers/initiator, and a heating mantle. Solvent was precharged to the reactor in the amounts listed in Table 2. The container was flushed with nitrogen and kept under a nitrogen blanket during the reaction. Solvent, monomers and initiator were added according to the amounts indicated in the Table 2 and heated to the reaction temperature (78°C with reflux for Examples 1 and 2, 70°C with reflux for Examples 3 and 4). After the reaction temperature had been reached, the dosing of the monomers was started at t=0 and was continuously metered in over the time listed in Table 2. The metered components were at room temperature prior to addition.

**Table 1**

| component | Wt% |
|---|---|
| HO-mPDMS | 59.3 |
| DMA | 27 |
| HEMA | 11.5 |
| Norbloc | 2.2 |
| Blue HEMA | 0.02 |
| Total | 100 |

**Table 2**

| Total amount (g) | | | | | | Sol start (g) | Continuously added (g) | | | | |
|---|---|---|---|---|---|---|---|---|---|---|---|
| Ex# | Sol | Sol | DMA | MA's | Init, | Sol | DMA MA'S | | Init | Sol | T Hrs |
| 1 | EtOH | 160 | 32.4 | 87.6 | 0.05 | 105 | 32.4 | 87.6 | 0.05 | 55 | 8 |
| 2 | EtOH | 160 | 32.4 | 87.6 | 0.05 | 66 | 32.4 | 87.6 | 0.05 | 94 | 4.5 |
| 3 | 3:1 H/E | 160 | 32.4 | 87.6 | 0.05 | 110 | 32.4 | 87.6 | 0.05 | 50 | 3.5 |
| 4 | 3:1 H/E | 246 | 32.4 | 87.6 | 0.23 | 164 | 32.4 | 87.6 | 0.23 | 82 | 4.5 |

| | | | | | | | | | | | |
|---|---|---|---|---|---|---|---|---|---|---|---|
| H/E = Heptane/ethanol Sol = Solvent, init = initiator MA's: Methacrylates (HO-mPDMS, HEMA, Norbloc and Blue HEMA) All amounts shown in grams, batch size 120g polymer | | | | | | | | | | | |

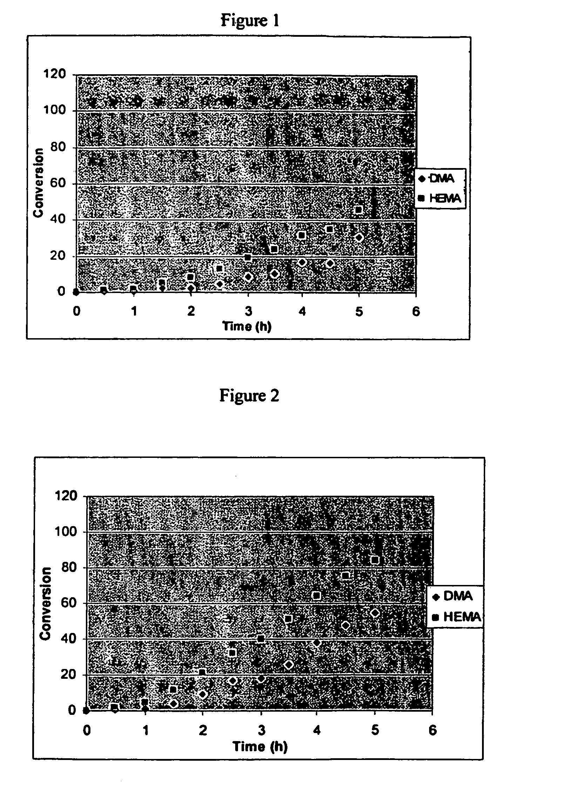

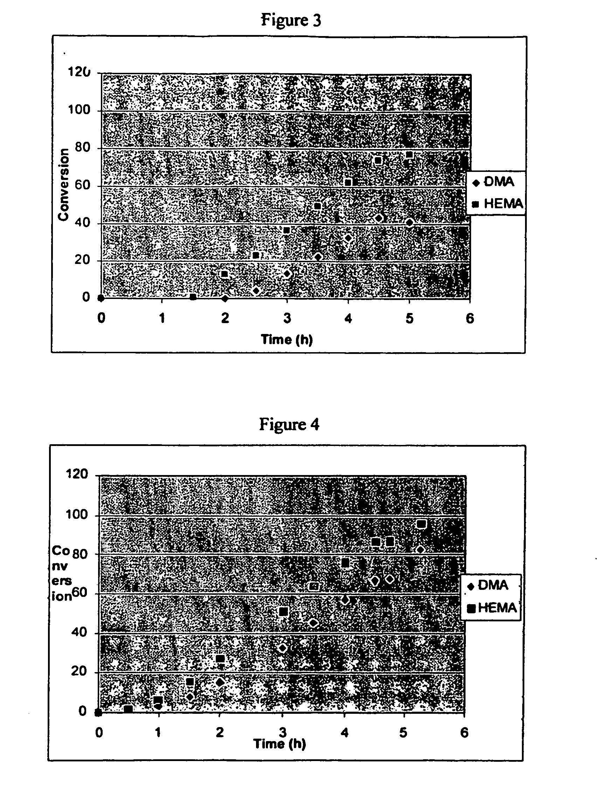

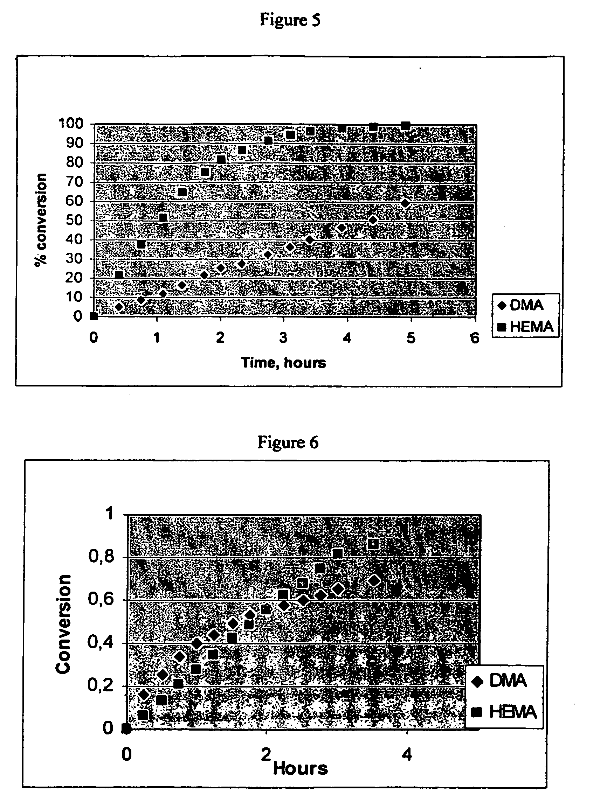

The monomer conversion was followed and is shown in Figures 1-4. Figure 5 shows the percent conversion as a function of time for prepolymer made using a batch process (all monomers added together at the beginning of the reaction). The graphs show that, when compared to a conventional batch polymerization (Comparative Example 1), the conversion of DMA in the process of the present invention more closely followed that of HEMA.

### Comparative Example I

Example 1 was repeated, except that all the monomers were added together at the start of the reaction.

### Examples 5-6

Prepolymers were formed from the components listed in Table 3. AMBM was used as the initiator. The reactions were conducted in a 3-necked 1 L round-bottomed glass reactor equipped with a magnetic stirrer, reflux condenser and inlet for dosing of monomers/initiator, and a heating mantle. For Example 5, 160 gms of ethanol and all components listed in Table 3, other than HEMA were precharged to the reactor as the first reaction mixture. The first reaction mixture was heated to 78°C. The second reaction mixture (5.75gm HEMA in 25 gm ethanol, 36 ml total) was added to the first reaction mixture at a rate of 3 ml every 15 minutes. The reaction temperature was maintained at 78°C with reflux, throughout the reaction.

For Example 6, the reactive components were formed into Solutions A and B, shown in Table 3. Solution A and 40 weight% of Solution B were precharged to the reactor as the first reaction mixture. The container was flushed with nitrogen and kept under a nitrogen blanket during the reaction. The first reaction mixture was heated to 68°C. The remaining portion of Solution B was added to the reactor according to the amounts indicated in the Table 4. The reaction temperature was maintained at 68°C throughout the reaction, which was conducted without reflux. The dosing of the monomers was started at t=0 and was metered as specified in Table 4.

**Table 3**

| | Ex. 5 (gm) | Solution A | Solution B |
|---|---|---|---|
| | | Ex. 6 (gm) | Ex. 6 (gm) |
| HO-mPDMS | 29.65 | | 26.4 |
| DMA | 13.5 | 35.88 | |
| HEMA | 5.75 | | 6.19 |
| Norbloc | 1.1 | 2.64 | |
| Blue HEMA | 0.01 | | 0.0096 |
| AMBN | 0.1925 | 0.46 | |
| EtOH | 185 | 155.93 | 163.01 |

**Table 4**

| Ex# | Batch (gm) | Addition | Mp | Mn | Mw | Pd |
|---|---|---|---|---|---|---|
| 5 | 120 | HEMA added continuously over 3h | 46 | 30 | 55 | 1.9 |
| 6 | 120 | 40% Solution B at start, 20% Solution B added at 0, 1 and 2 hrs | 30 | 20 | 43 | 2.2 |

The monomer conversion for Example 5 was followed and is shown in Figure 6. The graphs show that, when compared to a conventional batch polymerization (Figure 5), the conversion of DMA in the process of the present invention more closely followed that of HEMA.

### Examples 7-10

Polymers were formed from the (meth)acrylate monomers listed in Table 5. AMBM was used as an initiator. The reactions were conducted in a 3-necked 1 L round-bottomed glass reactor equipped with a magnetic stirrer, reflux condenser and inlet for dosing of monomers/initiator, and a heating mantle. The reactive components were formed into Solutions A and B, shown in Table 6. Solution A was pre precharged to the reactor in the amounts listed in Table 6. The container was flushed with nitrogen and kept under a nitrogen blanket during the reaction. Solution B was continuously added over 4 hours according to the amounts indicated in the Table 6. Examples 7, 9 and 10 were heated to 70°C with reflux and Example 8 was heated to 78°C with reflux. The solvent and reactants present in the reaction vessel at time 0 were preheated to the reaction temperature prior to the start of the reaction.

**Table 5 Compositions**

| | Formuln A | Formuln B |
|---|---|---|
| monomer | (wt%) | (wt%) |
| HO-mPDMS | 59.3 | 59.3 |
| DMA | 27 | 22.5 |
| HEMA | 11.5 | 16 |
| Norbloc | 2.2 | 2.2 |
| Blue HEMA | 0.02 | 0.02 |
| Total | 100 | 100 |

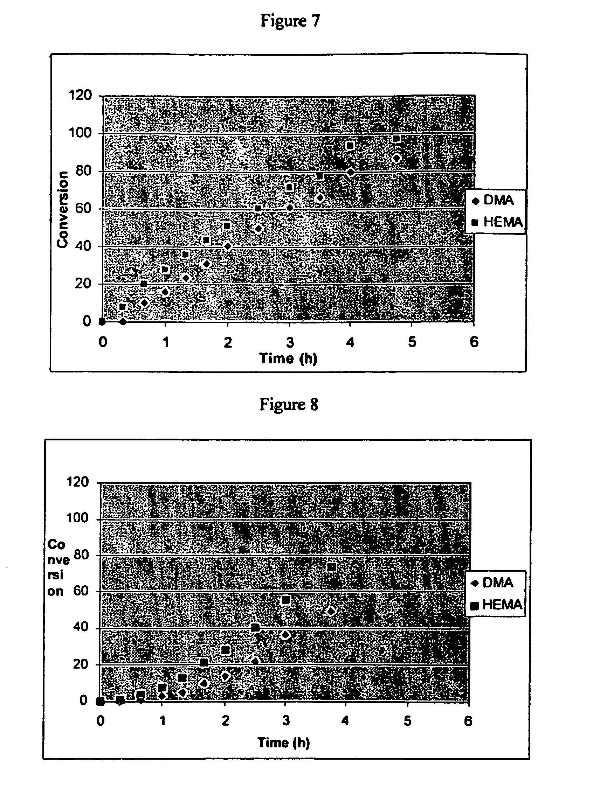

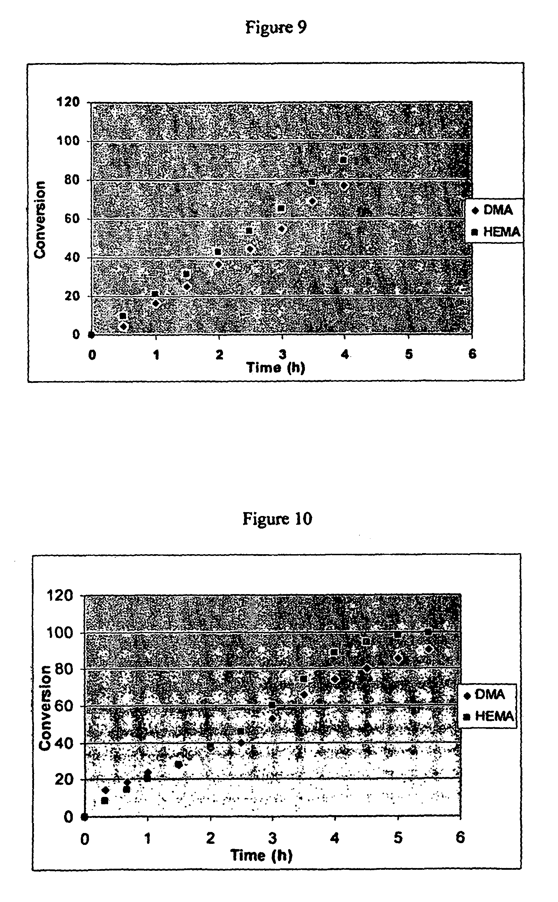

The monomer conversion was followed and is shown in Figures 7 through 10. The graphs show that, when compared to a conventional batch polymerization (Figure 5), the conversion of DMA in the process of the present invention more closely followed that of HEMA.

**Table 6**

| | | Total amount (g) | | | | | Solution A | | | | | | | Solution B amount (g) | | | |
|---|---|---|---|---|---|---|---|---|---|---|---|---|---|---|---|---|---|
| Ex # | Comp Form | Solv. | Solv | DMA | MA's | Init. | DMA (g) | % DMA | MA's (g) | % MA | %DMA/ %MA | Init. (g) | Sol v (g) | DMA | MA's | Init | Solv |
| 7 | A | 3:1 H/E | 240 | 32.4 | 87.6 | 0.462 | 10.3 | 32 | 19.3 | 22 | 1.4 | 0.102 | 184 | 22.2 | 68.3 | 0.36 | 56 |
| 8 | A | EtOH | 240 | 32.4 | 87.6 | 0.116 | 3.52 | 11 | 4.38 | 5 | 2.2 | 0.012 | 171 | 28.9 | 83.2 | 0.1 | 69 |
| 9 | A | 3:1 H/E | 240 | 32.4 | 87.6 | 0.58 | 6.13 | 19 | 6.57 | 7.5 | 2.5 | 0.23 | 154 | 26.3 | 81 | 0.35 | 86 |
| 10 | B | 3:1 H/E | 240 | 27 | 93.1 | 0.58 | 8.5 | 32 | 6.98 | 7.5 | 4.2 | 0.29 | 151 | 18.5 | 86.1 | 0.29 | 89 |

| | | | | | | | | | | | | | | | | | |
|---|---|---|---|---|---|---|---|---|---|---|---|---|---|---|---|---|---|
| Solvent: EtOH = ethanol; H/E = Heptane/ethanol MA's: Methacrylates (HO-mPDMS, HEMA, Norbloc and Blue HEMA) | | | | | | | | | | | | | | | | | |

## Claims

1. A process for forming a prepolymer from at least one first component having a reaction rate constant k₁ and at least one second component having a reaction rate constant, k₂ which is less than 0.5k₁, **characterized in that** said process comprises either:
(a) adding under prepolymer forming conditions, to a second mixture comprising a solvent, a first mixture comprising said at least one first component, said at least one second component, at least one polymerization initiator and optionally at least one solvent; or
(b) adding, under prepolymer forming conditions, a first mixture comprising said at least one first component, to a second mixture comprising at least one solvent and said at least one second component,
wherein said adding step is controlled to achieve substantially matched conversion rates of said first and second components to said prepolymer throughout said adding step.

2. A process according to claim 1 comprising:
forming a first mixture comprising at least one solvent, at least a portion of polymerization initiator, and a portion of said first and second reactive components comprising between 1 and 40 wt% of said at least one first component based upon all of the first component to be added during said process, wherein the second and first components are present in the first reaction mixture in a ratio of at least k₁/k₂; and
adding, under prepolymer forming conditions, a second mixture comprising any remaining portion of the reactive components and the initiator.

3. The process of claim 2 wherein at least one of said first and second component comprises silicone and at least one of said first and second component comprises at least one hydrophilic component.

4. The process of any preceding claim wherein said second mixture is gradually added to said first mixture in intervals over the reaction time.

5. The process of any preceding claim wherein said first component comprises at least one silicone-containing (meth)acrylate monomer.

6. The process of claim 5 wherein said first mixture further comprises at least one hydrophilic (meth)acrylate monomer.

7. The process of claim 5 wherein said second component is a hydrophilic monomer.

8. The process of claim 7 wherein said hydrophilic monomer comprises at least one (meth)acrylamide component is selected from the group consisting of hydrophilic monomers comprising a styrene group, n-vinyl lactam group, vinyl amide group, fumarate and combinations thereof.

9. The process of claim 8 wherein said (meth)acrylamide component is selected from the group consisting of N,N-dimcthylnrylamide, N-vinylpyrrolidone, N-vinylmethacetamide, 2-hydroxyethyl methacrylamide, 2,vinyl-4,4-dimethyl-2-oxazoline-5- one, N-vinyloxycarbonyl alanine and combinations thereof.

10. The process of claim 6 wherein said hydrophilic (meth)acrylate monomer is selected from the group consisting of 2-hydroxyethyl merhacrylate, glycerol monomethacrylate, polyethyleneglycol monomethacrylate, methacrylio acid, acrylic acid, and combinations thereof.

11. The process of claim 6 wherein said hydrophilic (meth)acrylate monomer comprises 2-hydroxyethyl methacrylate.

12. The process of claim 5 wherein said at least one silicone-containing (meth)acrylate monomer is selected from the group consisting of PDMS monomers, SiGMA type monomers, TRIS type monomers, and mixtures thereof.

13. The process of claim 5 wherein said at least one silicone-containing (meth)acrylate monomer comprises at least one PDMS monomer selected from the group consisting of mono-(3-methacryloxy-2-hydroxpropyloxy)propyl terminated mono-butyl terminated polydimethylsiloxanes; monomethacryloxypropyl terminated mono-n-butyl terminated polydimethylsiloxanes, and combinations thereof.

14. The process of claim 5 wherein said at least one silicone-containing (meth)acrylate monomer comprises a monomer selected from the group consisting of 3-methacryloxy-2-(hydroxypropyloxy)propylbis(trimethylsiloxy)methylsilane), 3-methacryloxy-2-(hydroxypropyloxy)propyltris(trimethylsiloxy)silane, mono-(3-methacryloxy-2-hydroxypropyloxy)propyl terminated, mono-butyl terminated polydimethylsiloxanes; monomethacryloxypropyl terminated mono-n-butyl terminated polydimethylsiloxanes; and mixtures thereof.

15. The process of claim 14 wherein said second component comprises a (meth)acrylamide component selected from the group consisting of N,N-dimethylacrylamide, N-vinylpyrrolidone, N-vinylmethacetamide, and combinations thereof.

16. The process of claim 14 wherein said (meth)acrylamide component comprises N,N-dimethylacrylamide.

17. The process of any preceding claim wherein said prepolymer is formed from a reaction mixture, which after addition of all components, comprises between about 20 and about 80 weight % hydrophilic components and between about 20 and about 80 weight % silicone containing components based upon all reactive components.

18. The process of claim 2 wherein said prepolymer is formed from a reaction mixture, which after addition of all components, comprises between about 30 and about 60 weight % hydrophilic components and between about 40 end about 60 weight % silicone containing components, based upon all reactive components.

19. The process of claim 2 wherein the conversion of said first and second components to said prepolymer is within 30% throughout said adding step.

20. The process of claim 2 wherein the conversion of said first and second components is within 10% throughout said adding step.

21. The process of claim 2 wherein said prepolymer has a molecular weight of about 30 to about 200 kD, and a polydispersity of less than about 3.

22. The process of claim 2 wherein said prepolymer has a molecular weight of about 30 to about 200 kD, and a polydispersity of between about 1.5 and about 3.

23. The process of any preceding claim wherein addition of an accumulated amount of about 50% by weight of the at least one (meth)acrylate and (meth)acrylamide components is reached within about 0.5 to about 5 hours from initiation of the addition of said reaction mixture.

24. The process of claim 1 wherein said first mixture further comprises a portion of said at least one polymerization initiator.

25. The process of claim 2 wherein said first mixture is maintained at a reaction temperature throughout said adding step.

26. The process of claim 23 wherein said first mixture comprises a portion of said solvent, and said second mixture comprises remaining solvent.

## Patentansprüche

1. Verfahren zur Bildung eines Prepolymers aus mindestens einer ersten Komponente mit einer Reaktionsgeschwindigkeitskonstante k₁ und mindestens einer zweiten Komponente mit einer Reaktionsgeschwindigkeitskonstante k₂, die kleiner als 0,5k₁ ist, **dadurch gekennzeichnet, daß** man:
(a) unter Prepolymerbildungsbedingungen eine erste Mischung, die die mindestens eine erste Komponente, die mindestens eine zweite Komponente, mindestens einen Polymerisationsinitiator und gegebenenfalls mindestens ein Lösungsmittel umfaßt, zu einer zweiten Mischung, die ein Lösungsmittel umfaßt, gibt; oder
(b) unter Prepolymerbildungsbedingungen eine erste Mischung, die die mindestens eine erste Komponente umfaßt, zu einer zweiten Mischung, die mindestens ein Lösungsmittel und die eine zweite Komponente umfaßt, gibt,
wobei der Zugabeschritt so gesteuert wird, daß man über den gesamten Zugabeschritt weitgehend angeglichene Umwandlungsgeschwindigkeiten der ersten und zweiten Komponenten zu dem Prepolymer erhält.

2. Verfahren nach Anspruch 1, bei dem man:
eine erste Mischung, die mindestens ein Lösungsmittel, mindestens einen Teil des Polymerisationsinhibitors und einen Teil der ersten und zweiten reaktiven Komponenten, der zwischen 1 und 40 Gew.-% der mindestens einen ersten Komponente, bezogen auf die bei dem Verfahren zuzugebende Gesamtmenge der ersten Komponente ausmacht, umfaßt, bildet, wobei die zweiten und ersten Komponenten in der ersten Reaktionsmischung in einem Verhältnis von mindestens k₁/k₂ vorliegen; und
unter Prepolymerbildungsbedingungen eine zweite Mischung, die jeglichen restlichen Teil der reaktiven Komponenten und den Initiator enthält, zugibt.

3. Verfahren nach Anspruch 2, bei dem die erste und/oder zweite Komponente Silikon umfaßt und die erste und/oder zweite Komponente mindestens eine hydrophile Komponente umfaßt.

4. Verfahren nach einem der vorhergehenden Ansprüche, bei dem man die zweite Mischung in Intervallen über die Reaktionszeit allmählich zu der ersten Mischung gibt.

5. Verfahren nach einem der vorhergehenden Ansprüche, bei dem die erste Komponente mindestens ein silikonhaltiges (Meth)acrylatmonomer umfaßt.

6. Verfahren nach Anspruch 5, bei dem die erste Mischung ferner mindestens ein hydrophiles (Meth)-acrylatmonomer umfaßt.

7. Verfahren nach Anspruch 5, bei dem es sich bei der zweiten Komponente um ein hydrophiles Monomer handelt.

8. Verfahren nach Anspruch 7, bei dem das hydrophile Monomer mindestens eine (Meth)acrylamid-Komponente aus der Gruppe bestehend aus hydrophilen Monomeren mit einer Styrolgruppe, n-Vinyllactamgruppe, Vinylamidgruppe, Fumarat und Kombinationen davon umfaßt.

9. Verfahren nach Anspruch 8, bei dem man die (Meth)-acrylamid-Komponente aus der Gruppe bestehend aus N,N-Dimethylacrylamid, N-Vinylpyrrolidon, N-Vinylmethacetamid, 2-Hydroxyethylmethacrylamid, 2-Vinyl-4,4-dimethyl-2-oxazolin-5-on, N-Vinyloxycarbonylalanin und Kombinationen davon auswählt.

10. Verfahren nach Anspruch 6, bei dem man das hydrophile (Meth)acrylatmonomer aus der Gruppe bestehend aus 2-Hydroxyethylmethacrylat, Glycerinmonomethacrylat, Polyethylenglykolmonomethacrylat, Methacrylsäure, Acrylsäure und Kombinationen davon auswählt.

11. Verfahren nach Anspruch 6, bei dem das hydrophile (Meth)acrylatmonomer 2-Hydroxyethylmethacrylat umfaßt.

12. Verfahren nach Anspruch 5, bei dem man das mindestens eine silikonhaltige (Meth)acrylat-monomer aus der Gruppe bestehend aus PDMS-Monomeren, Monomeren vom SiGMA-Typ, Monomeren vom TRIS-Typ und Mischungen davon auswählt.

13. Verfahren nach Anspruch 5, bei dem das mindestens eine silikonhaltige (Meth)acrylatmonomer mindestens ein PDMS-Monomer aus der Gruppe bestehend aus mono(3-methacryloxy-2-hydroxypropyloxy)propylterminierten monobutylterminierten Polydimethylsiloxanen; monomethacryloxypropylterminierten mono-n-butylterminierten Polydimethylsiloxanen und Kombinationen davon umfaßt.

14. Verfahren nach Anspruch 5, bei dem das mindestens eine silikonhaltige (Meth)acrylatmonomer ein Monomer aus der Gruppe bestehend aus 3-Methacryloxy-2-(hydroxypropyloxy)propylbis(trimethylsiloxy)methylsilan), 3-Methacryloxy-2-(hydroxypropyloxy)propyltris(trimethylsiloxy)-silan, mono(3-methacryloxy-2-hydroxypropyloxy)-propylterminierten monobutylterminierten Polydimethylsiloxanen; monomethacryloxypropylterminierten mono-n-butylterminierten Polydimethylsiloxanen und Mischungen davon umfaßt.

15. Verfahren nach Anspruch 14, bei dem die zweite Komponente eine (Meth)arylamid-Komponente aus der Gruppe bestehend aus N,N-Dimethylacrylamid, N-Vinylpyrrolidon, N-Vinylmethacetamid und Kombinationen davon umfaßt.

16. Verfahren nach Anspruch 14, bei dem die (Meth)arylamid-Komponente N,N-Dimethylacrylamid umfaßt.

17. Verfahren nach einem der vorhergehenden Ansprüche, bei dem man das Prepolymer aus einer Reaktionsmischung bildet, die nach Zugabe aller Komponenten zwischen etwa 20 und etwa 80 Gew.-% hydrophile Komponenten und zwischen etwa 20 und etwa 80 Gew.-% silikonhaltige Komponenten, bezogen auf alle reaktiven Komponenten, umfaßt.

18. Verfahren nach Anspruch 2, bei dem man das Prepolymer aus einer Reaktionsmischung bildet, die nach Zugabe aller Komponenten zwischen etwa 30 und etwa 60 Gew.-% hydrophile Komponenten und zwischen etwa 40 und etwa 60 Gew.-% silikonhaltige Komponenten, bezogen auf alle reaktiven Komponenten, umfaßt.

19. Verfahren nach Anspruch 2, bei dem der Umsatz der ersten und zweiten Komponenten zu dem Prepolymer über den gesamten Zugabeschritt innerhalb von 30% liegt.

20. Verfahren nach Anspruch 2, bei dem der Umsatz der ersten und zweiten Komponenten zu dem Prepolymer über den gesamten Zugabeschritt innerhalb von 10% liegt.

21. Verfahren nach Anspruch 2, bei dem das Prepolymer ein Molekulargewicht von etwa 30 bis etwa 200 kD und eine Polydispersität von weniger als etwa 3 aufweist.

22. Verfahren nach Anspruch 2, bei dem das Prepolymer ein Molekulargewicht von etwa 30 bis etwa 200 kD und eine Polydispersität zwischen etwa 1,5 und etwa 3 aufweist.

23. Verfahren nach einem der vorhergehenden Ansprüche, bei dem die Zugabe einer akkumulierten Menge von etwa 50 Gew.-% der mindestens einen (Meth)acrylat- und (Meth)acrylamid-Komponenten innerhalb von etwa 0,5 bis etwa 5 Stunden ab Beginn der Zugabe der Reaktionsmischung erreicht wird.

24. Verfahren nach Anspruch 1, bei dem die erste Mischung ferner einen Teil des mindestens einen Polymerisationsinitiators umfaßt.

25. Verfahren nach Anspruch 2, bei dem man die erste Mischung über den gesamten Zugabeschritt bei einer Reaktionstemperatur hält.

26. Verfahren nach Anspruch 23, bei dem die erste Mischung einen Teil des Lösungsmittels umfaßt und die zweite Mischung restliches Lösungsmittel umfaßt.

## Revendications

1. Procédé de fabrication d'un prépolymère à partir d'au moins un premier composant ayant une constante de vitesse de réaction k₁ et au moins un deuxième composant ayant une constante de vitesse de réaction k₂ qui est inférieure à 0,5 k₁, **caractérisé en ce que** ledit procédé comprend soit :
(a) l'addition, dans des conditions de formation du prépolymère, à un deuxième mélange comprenant un solvant, d'un premier mélange comprenant ledit au moins un premier composant, ledit au moins un deuxième composant, au moins un initiateur de polymérisation et éventuellement au moins un solvant ; soit
(b) l'addition, dans des conditions de formation du prépolymère, d'un premier mélange comprenant ledit au moins un premier composant, à un deuxième mélange comprenant au moins un solvant et ledit au moins un deuxième composant,
dans lequel ladite étape d'addition est contrôlée pour atteindre des taux de conversion quasiment correspondants desdits premier et deuxième composants audit prépolymère pendant toute ladite étape d'addition.

2. Procédé selon la revendication 1, comprenant :
la formation d'un premier mélange comprenant au moins un solvant, au moins une portion d'initiateur de polymérisation, et une portion desdits premier et deuxième composants réactifs comprenant de 1 % à 40 % en poids dudit au moins un premier composant relativement à la totalité du premier composant à ajouter durant ledit procédé, dans lequel lesdits premier et deuxième composants sont présents dans le premier mélange réactionnel dans un rapport d'au moins k₁/k₂ ; et
l'addition, dans des conditions de formation du prépolymère, d'un deuxième mélange comprenant toute portion restante des composants réactifs et de l'initiateur.

3. Procédé selon la revendication 2, dans lequel au moins un desdits premier et deuxième composants comprend de la silicone et au moins un desdits premier et deuxième composants comprend au moins un composant hydrophile.

4. Procédé selon l'une quelconque des revendications précédentes, dans lequel ledit deuxième mélange est progressivement ajouté audit premier mélange par intervalles durant le temps de réaction.

5. Procédé selon l'une quelconque des revendications précédentes, dans lequel ledit premier composant comprend au moins un monomère (méth)acrylate contenant de la silicone.

6. Procédé selon la revendication 5, dans lequel ledit premier mélange comprend en outre au moins un monomère (méth)acrylate hydrophile.

7. Procédé selon la revendication 5, dans lequel ledit deuxième composant est un monomère hydrophile.

8. Procédé selon la revendication 7, dans lequel ledit monomère hydrophile comprend au moins un composant (méth)acrylamide sélectionné dans le groupe constitué de monomères hydrophiles comprenant un groupe styrène, un groupe n-vinyllactame, un groupe vinylamide, un fumarate, et de combinaisons de ceux-ci.

9. Procédé selon la revendication 8, dans lequel ledit composant (méth)acrylamide est sélectionné dans le groupe constitué du N,N-diméthylacrylamide, de la N-vinylpyrrolidone, du N-vinylméthacétamide, du 2-hydroxyéthylméthacrylamide, de la 2-vinyl-4,4-diméthyl-2-oxazoline-5-one, de la N-vinyloxyxarbonylalanine et de combinaisons de ceux-ci.

10. Procédé selon la revendication 6, dans lequel ledit monomère (méth)acrylate hydrophile est sélectionné dans le groupe constitué du 2-hydroxyéthylméthacrylate, du monométhacrylate de glycérol, du monométhacrylate de polyéthylène glycol, de l'acide méthacrylique, de l'acide acrylique, et de combinaisons de ceux-ci.

11. Procédé selon la revendication 6, dans lequel ledit monomère (méth)acrylate hydrophile comprend du méthacrylate de 2-hydroxyéthyle.

12. Procédé selon la revendication 5, dans lequel ledit au moins un monomère (méth)acrylate contenant de la silicone est sélectionné dans le groupe constitué de monomères PDMS, de monomères de type SiGMA, de monomères de type TRIS, et de mélanges de ceux-ci.

13. Procédé selon la revendication 5, dans lequel ledit au moins un monomère (méth)acrylate contenant de la silicone comprend au moins un monomère PDMS sélectionné dans le groupe constitué de polydiméthylsiloxanes à terminaison mono-(3-méthacryloxy-2-hydroxypropyloxy)propyle et à terminaison mono-butyle ; de polydiméthylsiloxanes à terminaison monométhacryloxypropyle et à terminaison mono-n-butyle, et de combinaisons de ceux-ci.

14. Procédé selon la revendication 5, dans lequel ledit au moins un monomère (méth)acrylate contenant de la silicone comprend un monomère sélectionné dans le groupe constitué de polydiméthylsiloxanes à terminaison 3-méthacryloxy-2-(hydroxypropyloxy)propylbis(triméthylsiloxy)méthylsilane), 3-méthacryloxy-2-(hydroxypropyloxy)propyltris(triméthylsiloxy)silane, mono-(3-méthacryloxy-2-hydroxypropyloxy)propyle et à terminaison mono-butyle ; de polydiméthylsiloxanes à terminaison monométhacryloxypropyle et à terminaison mono-n-butyle ; et de mélanges de ceux-ci.

15. Procédé selon la revendication 14, dans lequel ledit deuxième composant comprend un composant (méth)acrylamide sélectionné dans le groupe constitué du N,N-diméthylacrylamide, de la N-vinylpyrrolidone, du N-vinylacétamide, et de combinaisons de ceux-ci.

16. Procédé selon la revendication 14, dans lequel ledit composant (méth)acrylamide comprend du N,N-diméthylacrylamide.

17. Procédé selon l'une quelconque des revendications précédentes, dans lequel ledit prépolymère est formé à partir d'un mélange réactionnel, lequel, après addition de tous les composants, comprend d'environ 20 % à environ 80 % en poids de composants hydrophiles et d'environ 20 % à environ 80 % en poids de composants contenant de la silicone, relativement à la totalité des composants réactifs.

18. Procédé selon la revendication 2, dans lequel ledit prépolymère est formé à partir d'un mélange réactionnel, lequel, après addition de tous les composants, comprend d'environ 30 % à environ 60 % en poids de composants hydrophiles et d'environ 40 % à environ 60 % en poids de composants contenant de la silicone, relativement à la totalité des composants réactifs.

19. Procédé selon la revendication 2, dans lequel le taux de conversion desdits premier et deuxième composants audit prépolymère est dans une limite de 30 % pendant toute ladite étape d'addition.

20. Procédé selon la revendication 2, dans lequel le taux de conversion desdits premier et deuxième composants audit prépolymère est dans une limite de 10 % pendant toute ladite étape d'addition.

21. Procédé selon la revendication 2, dans lequel ledit prépolymère a une masse moléculaire d'environ 30 kD à environ 200 kD, et une polydispersité inférieure à environ 3.

22. Procédé selon la revendication 2, dans lequel ledit prépolymère a une masse moléculaire d'environ 30 kD à environ 200 kD, et une polydispersité d'environ 1,5 à environ 3.

23. Procédé selon l'une quelconque des revendications précédentes, dans lequel l'addition d'une quantité cumulée d'environ 50 % en poids desdits au moins un composant (méth)acrylate et un composant (méth)acrylamide est atteinte en environ 0,5 à environ 5 heures à partir du début de l'addition dudit mélange réactionnel.

24. Procédé selon la revendication 1, dans lequel ledit premier mélange comprend en outre une portion dudit au moins un initiateur de polymérisation.

25. Procédé selon la revendication 2, dans lequel ledit premier mélange est maintenu à une température de réaction pendant toute ladite étape d'addition.

26. Procédé selon la revendication 23, dans lequel ledit premier mélange comprend une portion dudit solvant, et ledit deuxième mélange comprend le reste du solvant.
